# EUROPEAN PATENT SPECIFICATION

(11) **EP 2 960 534 B1**
(45) Date of publication and mention of the grant of the patent: **22.11.2017**
(21) Application number: 15169518.6
(22) Date of filing: 28.05.2015
(51) Int. Cl.: F16C 27/06

(54) **CORD FABRIC REINFORCED CENTER BEARING DIAPHRAGM**
MIT CORDGEWEBE VERSTÄRKTE MITTELLAGERMEMBRAN
DIAPHRAGME DE PALIER DE CENTRE RENFORCÉ PAR UN TISSU DE CORDON

(30) Priority: 25.06.2014 TR 201407367
(43) Date of publication of application: 30.12.2015
(73) Proprietor: Tirsan Kardan Sanayi Ve Ticaret Anonim Sirketi, 45030 Manisa (TR)
(72) Inventor: Ertunç, Cihanser, 45030 Manisa (TR)
(74) Representative: Dereligil, Ersin

(56) References cited:
- EP-A2- 0 101 235
- JP-A- 2000 192 954
- JP-U- S5 892 553
- JP-U- S6 264 632
- US-A1- 2013 336 825

## Description

### Technical Field

The invention relates to a vibration dampening center bearing diaphragm made of rubber or elastomeric plastic which allows the drive shaft to be assembled and supported on the motor vehicle; provides freedom of motion against the radial and axial forces acting on the drive shaft.

The present invention relates to a cord fabric reinforced center bearing diaphragm which provides a long-lasting performance against radial and axial repeated motions thanks to the diaphragm structure thereof and whose risks of deformation are reduced.

### Prior Art

Drive shafts are the transmission elements used for transmitting the rotary motion together with power between the motor or transmission box and the differential in motor vehicles. A bearing which allows the drive shaft to be supported and born; and center bearing diaphragms which bear said bearing and also dampen the vibrations from motor/transmission box, sudden shocks affecting on the vehicle during driving by providing axial and radial freedom to the drive shaft, are used. The center bearing diaphragm is a vibration dampening element made of rubber or elastomeric plastic material which provides radial and axial freedom of motion to the drive shaft.

Drive shaft center bearings are commonly used in the automotive industry. Due to carrying the bearing, providing radial and axial freedom of motion to the drive shaft, and dampening the vibrations thereon, the center bearing diaphragm is a highly important element in the complete center bearing structure. Especially, the drive shafts operating in off-road conditions are more affected by radial and axial repeated motions due to the negative physical environmental conditions that they encounter. And in time, loss of flexibility and function is also observed in said drive shafts.

In the prior art, rubber or rubber-like diaphragms are used to dampen the vibration and also to provide freedom of motion to the drive shaft in the complete center bearings. In the related patents, rubber element, short fiber reinforced rubber block, and rubber diaphragms to the inner section of which liquid is injected are used. JP3266721B2, US4722618A, WO2008125792A1, JP06080919U,JP04224421A,JP61188231A

### Description of the Invention

The object of the invention is to introduce different technical properties providing a new development in the related technical field, distinctly from the drive shaft center bearing diaphragms used in the prior art.

An object of the invention is to present a cord fabric reinforced rubber center bearing diaphragm.

Another object of the invention is to present a center bearing diaphragm with a long economic life thanks to the cord fabric reinforcement.

Another object of the invention is to present a center bearing configuration increasing the life of the drive shaft and maintaining the flexibility thereof for a long time thanks to the cord fabric reinforced rubber center bearing diaphragm.

Another object of the invention is to present a center bearing configuration which highly dampens the vibrations occurring in the drive shaft and provides freedom of motion to the drive shaft.

Another object of the invention is to present a rigid structure which maintains the flexibility that it shows in the radial and axial repeated motions.

Another object of the invention is to provide a long service life and high performance against radial and axial repeated motions thanks to the cord fabric reinforced rubber diaphragm structure. Yet another object of the invention is to maintain the flexibility of the cord fabric reinforced rubber diaphragm structure and to eliminate the risks of deformation of the same in the off-road environmental conditions.

To achieve the aforementioned objects, the invention is a center bearing diaphragm according to claim 1.

### Figures to Facilitate the Understanding of the Invention

Figure-1 is the general assembly perspective view of the drive shaft together with the complete center bearing and the cord fabric reinforced rubber diaphragm used in the center bearing.
Figure-2 is the sectional and perspective view of the cord fabric reinforced rubber diaphragm configured between the mounting plate and the bearing cup.
Figure-2.1 is the separate sectional view of the cord fabric reinforced rubber diaphragm.
Figure-3 is the complete assembly and disassembly views of the center bearing body and the diaphragm configured between the mounting plate and the bearing cup.
Figure-4 is the separate general perspective view of the cord fabric reinforced rubber diaphragm according to the invention.
Figure-5 is the complete general perspective view which shows the drive shaft configured between the differential and the transmission box and the vibrations and motions occurring in said drive shaft representatively.

**Part Numbers**

| | |
|---|---|
| 100- Drive shaft | 309- Inner support surfaces |
| 200- Center bearing | 310- Outer knuckle |
| 300- Diaphragm | 311- Protrusion |
| 301- Mounting Plate | 312- Gripping surfaces |
| 302- Bearing cup | 313-Vertical support protrusion |
| 303- Bearing element | 314- Rib |
| 304- Bearing | 315- Supporting outer surface |
| 305- Cord fabric | 400-Differential |
| 306- Inner surface | 401-Transmission box |
| 307- Outer surface | X-Shaft motion |
| 308- Outer support surface | T-Motor oscillation |

### Detailed Description of the Invention

Illustrated in Figure-1 is the general assembly perspective view of the drive shaft (100), together with the center bearing (200) and the cord fabric reinforced rubber diaphragm (300). The configuration set forth with the invention eliminates the tear and reduction in the flexibility occurring in the structure of the diaphragm (300) as a result of the radial and axial repeated motions thanks to the reinforcement of cord fabric (305) woven with the number of weft varying optionally and comprised in the rubber-based diaphragm (300). Besides, a structure is provided in which the diaphragm (300) is flexible against the outer factors and also more rigid and resistant in the environments such as off-road operating conditions.

Illustrated in Figure-2 are the sectional and perspective views of the cord fabric (305) reinforced rubber-based diaphragm (300) configured between the mounting plate (301) and the bearing cup (302). The mounting plate (301) and the bearing cup (302) are born in the outer surface (307) and the inner surface (306) of the diaphragm, respectively, wherein the diaphragm (300) according to the invention is fixed between these two parts. The bearing (304) is centered by the bearing cup (302), and the bearing element (303) holding the bearing (304) and the other unit elements together by supporting the same is centered in the inner surface of the center bearing (200) (See figure-3).

Illustrated in Figure-4, on the other hand, is the separate general perspective view of the cord fabric (305) reinforced rubber-based diaphragm (300) according to the invention. The cord fabric (305) has preferably layers and lattices with a desired number in the diaphragm (300). Thanks to the reinforcement of cord fabric (305), the possible tears and deformations in the structure of the diaphragm (300) as a result of the radial and axial repeated motions are prevented. Moreover, the reductions in the flexibility thereof occurring in time are improved. Besides, a structure is provided, in which the diaphragm is flexible against the outer factors and also more rigid and resistant in the environments such as off-road operating conditions.

Illustrated in Figure-2.1 is the separate sectional view of the cord fabric (305) reinforced rubber diaphragm (300). Outer support surfaces (308) are formed in the inner and outer surfaces of the diaphragm (300). Thanks to the U-form of the outer knuckle (310), shocks and vibrations are absorbed and high strength is achieved against the outer forces acting on the drive shaft, by providing radial and axial freedom of motion simultaneously. Moreover, a protrusion (311) is formed in the inner form of the outer knuckle (310). Said protrusion (311) is supported with the rib (314) and contributes to the rigidity of the diaphragm (300). Similarly, gripping surfaces (312) and vertical support protrusion (313) are formed in order to provide the adaptation of the diaphragm (300) to the plate material. The multiple number of ribs (314) providing the rigidity of the diaphragm (300) are configured between the protrusion (311) and the supporting outer surface (315).

Illustrated in Figure-5 is the complete general perspective view which shows the drive shaft (100) configured between the differential (400) and the transmission box (401) and the vibrations occurring in said drive shaft (100) representatively. Center bearing (200) and the components thereof are configured for supporting and bearing the drive shaft (100) used for transmitting the rotary motion together with power between the motor or transmission box (401) and the differential (400). It is the center bearing (200) group which dampens the vibrations from said transmission box (401) and the sudden shocks affecting on the vehicle during driving for the drive shaft (100) and provides radial and axial freedom of motion to the drive shaft (100). Providing the system to be assembled to the vehicle in an integrated manner, the center bearing (200) components consist of a vibration dampening diaphragm (300) made of a rubber or elastomeric plastic, sealing and support elements used for preventing the bearing (304) from being affected by negative external environmental factors.

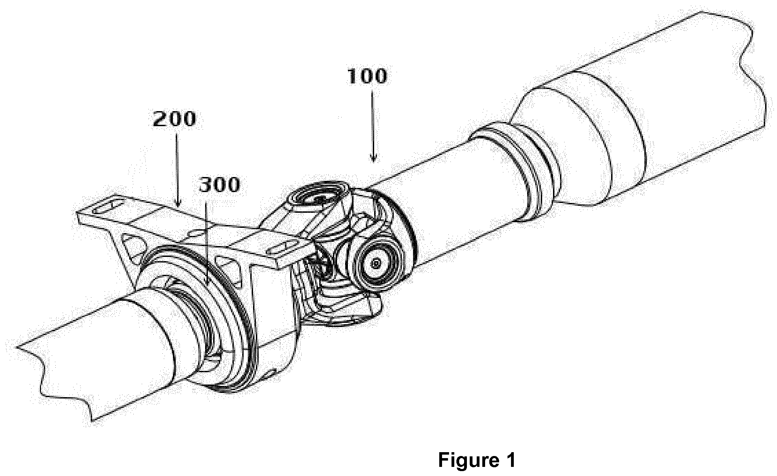

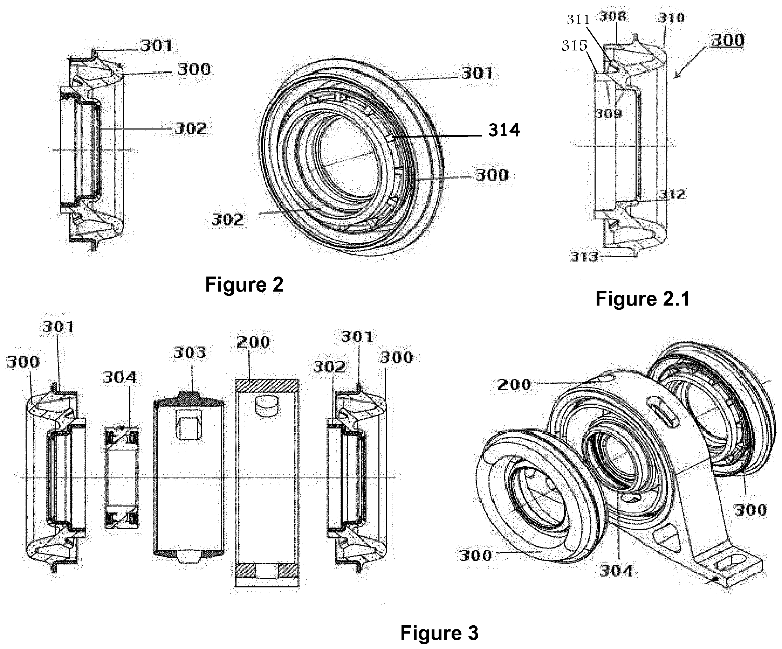

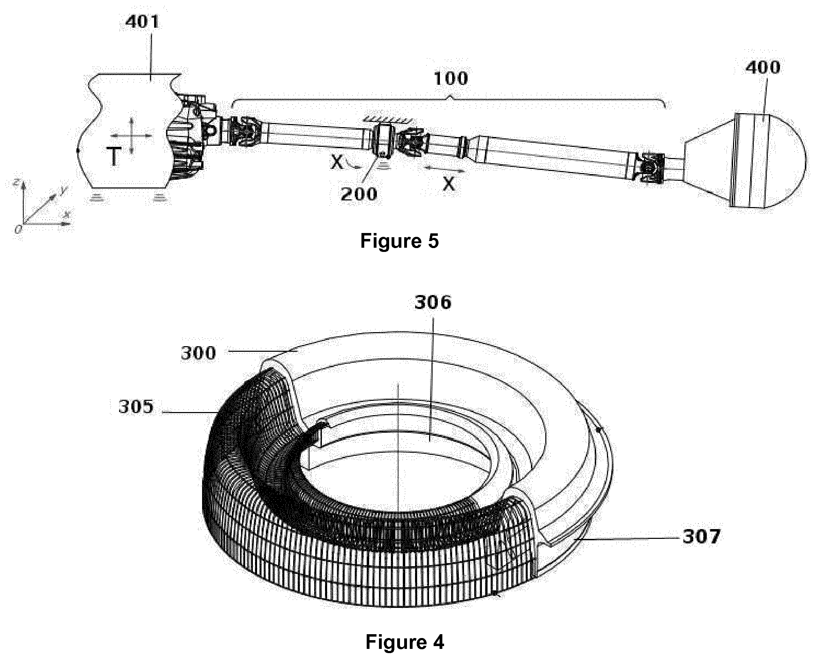

## Claims

1. A center bearing (200) diaphragm (300) which comprises a diaphragm (300) made of an elastic material and the inner and outer surfaces (306, 307) of which are supported by a bearing cup (302) and a mounting plate (301), respectively, and a bearing (304) which is centered by said bearing cup (302); provides radial and axial freedom of motion to a drive shaft (100), **characterized in that** said diaphragm (300) comprises a reinforcement of cord fabric (305) having a multiple number of layers and lattice structures, and further comprises an outer knuckle (310) having a protrusion (311) in the inner surface thereof providing a high strength, and further comprising a multiple number of ribs (314) configured between said protrusion (311) and a supporting outer surface (315) of the diaphragm (300) and providing the rigidity of said diaphragm (300).

2. The diaphragm (300) as in Claim 1, **characterized in** comprising a cord fabric (305) made of a rubber or elastomeric plastic material.

3. The diaphragm (300) as in Claim 1, **characterized in** comprising outer support surfaces (308) and inner support surfaces (309) having cascade surfaces gripping said bearing cup (302) and the mounting plate (301).

4. -The diaphragm (300) as in Claim 1, **characterized in** comprising surfaces (312) gripping said bearing cup (302) from the large surface thereof.

## Patentansprüche

1. Membran (300) eines Mittellagers (200), die eine Membran (300), die aus einem elastischen Werkstoff hergestellt wird und die Innen- und Außenflächen (306, 307) umfasst, die jeweils durch eine Lagerschale (302) und eine Montageplatte (301) gelagert werden, und ein Lager (304), das durch die Lagerschale (302) zentriert wird; stellt radiale und axiale Bewegungsfreiheit für eine Antriebswelle (100) bereit, **dadurch gekennzeichnet, dass** die Membran (300) eine Verstärkung aus Kordgewebe (305) mit einer Vielzahl von Schichten und Gitterstrukturen umfasst, und des Weiteren eine äußere Krempe (310) mit einem Vorsprung (311) in der Innenfläche derselben umfasst, die eine hohe Stärke bereitstellt, und des Weiteren eine Vielzahl von Rippen (314) umfasst, die zwischen dem Vorsprung (311) und einer unterstützten Außenfläche (315) der Membran (300) konfiguriert werden und die Steifigkeit der Membran (300) bereitstellen.

2. Membran (300) nach Anspruch 1, **gekennzeichnet durch** ein Umfassen eines aus einem Kautschuk oder elastomeren Kunststoffmaterial hergestellten Kordgewebes (305).

3. Membran (300) nach Anspruch 1, **gekennzeichnet durch** ein Umfassen von äußeren Unterstützungsflächen (308) und inneren Unterstützungsflächen (309) mit überlappenden Oberflächen, die die Lagerschale (302) und die Montageplatte (301) festhalten.

4. Membran (300) nach Anspruch 1, **gekennzeichnet durch** ein Umfassen von Oberflächen (312), die die Lagerschale (302) aus der großen Oberfläche derselben festhalten.

## Revendications

1. Diaphragme (300) de palier de centre (200) comprenant un diaphragme (300) constitué d'un matériau élastique et dont les surfaces interne et externe (306, 307) sont supportées par une coupelle de palier (302) et une plaque de montage (301), respectivement, et un palier (304) qui est centré par ladite coupelle de palier (302) ; conférant une liberté de mouvement radiale et axiale à un arbre de transmission (100), **caractérisé en ce que** ledit diaphragme (300) comprend un renforcement de tissu de cordon (305) comportant un nombre multiple de couches et de structures en treillis et comprenant en outre un joint d'articulation externe (310) possédant une saillie (311) dans la surface interne de celle-ci offrant une résistance élevée et comprenant en outre un nombre multiple de nervures (314) conçues entre ladite saillie (311) et une surface de support externe (315) du diaphragme (300) et conférant la rigidité audit diaphragme (300).

2. Diaphragme (300) selon la revendication 1, **caractérisé en ce qu'**il comprend un tissu de cordon (305) constitué d'un caoutchouc ou de matériau plastique élastomère.

3. Diaphragme (300) selon la revendication 1, **caractérisé en ce qu'**il comprend des surfaces de support externes (308) et des surfaces de support interne (309) possédant des surfaces en cascade agrippant ladite coupelle de palier (302) et la plaque de montage (301).

4. Diaphragme (300) selon la revendication 1, **caractérisé en ce qu'**il comprend des surfaces (312) agrippant ladite coupelle de palier (302) depuis la grande surface de celle-ci.
